# EUROPEAN PATENT SPECIFICATION

(11) **EP 3 176 956 B1**
(45) Date of publication and mention of the grant of the patent: **29.08.2018**
(21) Application number: 17150474.9
(22) Date of filing: 24.01.2013
(51) Int. Cl.: H04B 7/02, H04B 7/06, H04L 5/00, H04W 24/10, H04W 28/16, H04B 7/024

(54) **WIRELESS COMMUNICATION SYSTEM AND METHOD FOR CONTROLLING REPORTING SETTINGS**
DRAHTLOSKOMMUNIKATIONSSYSTEM UND VERFAHREN ZUR STEUERUNG DER BERICHTSEINSTELLUNGEN
SYSTÈME DE COMMUNICATION SANS FIL ET PROCÉDÉ DE COMMANDE DE RÉGLAGES DE RAPPORT

(30) Priority: 30.01.2012 JP 2012017280
(43) Date of publication of application: 07.06.2017
(62) Divisional of application: 13743597.0
(73) Proprietor: NEC Corporation, Tokyo 108-8001, (JP)
(72) Inventor: INOUE, Takamichi, Minato-ku, Tokyo 108-8001 (JP); HAMABE, Kojiro, Minato-ku, Tokyo 108-8001 (JP); KAKURA, Yoshikazu, Minato-ku, Tokyo 108-8001 (JP); ISHII, Naoto, Minato-ku, Tokyo 108-8001 (JP); LIU, Le, Minato-ku, Tokyo 108-8001 (JP)
(74) Representative: MacDougall, Alan John Shaw

(56) References cited:
- WO-A1-2011/100672
- WO-A2-2008/111822
- US-A1- 2010 115 358

## Description

### [Technical Field]

The present invention relates to a wireless communication system where coordinated transmission between multiple transmission points is performed and, more particularly, to a system and a method for controlling reporting settings.

### [Background Art]

In 3GPP (3rd Generation Partnership Project), coordinated transmission between multiple transmission points is in the process of standardization. The coordinated transmission between multiple transmission points is also called CoMP transmission (Coordinated Multi-Point transmission) and is aimed at increasing the throughput of user terminals located at the cell edge and/or the average cell throughput. Note that the term "transmission point" here will include equipment with wireless transmission functionality, such as a base station controlling a cell or sector and a remote radio head (RRH). Accordingly, this term will be used assuming that it includes a "radio base station" or "radio section" having such wireless transmission functionality, as well as a "transmission cell" or "transmission sector" generated by them.

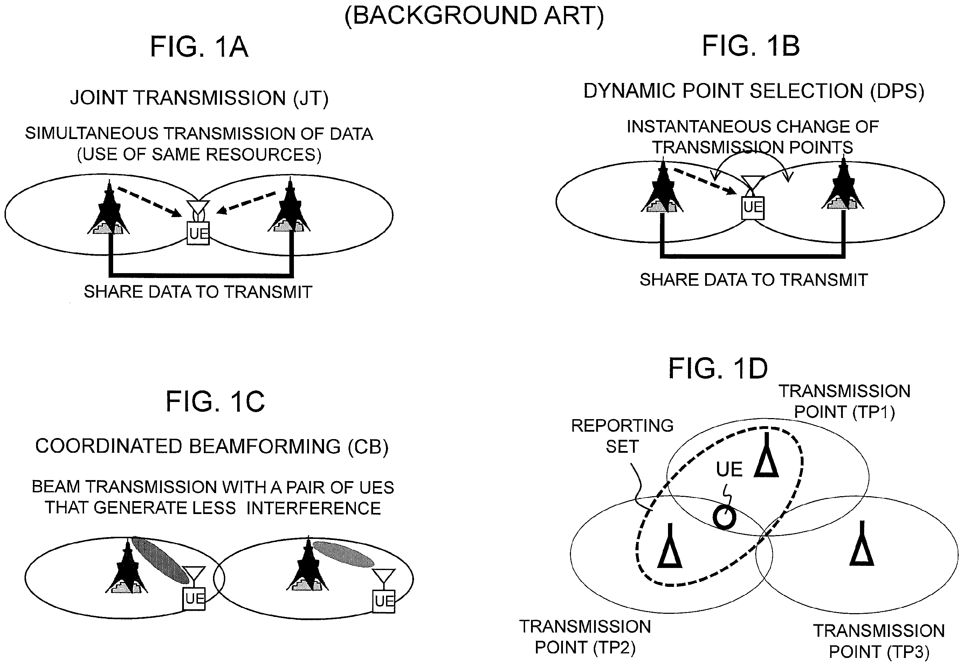

3GPP defines three CoMP transmission schemes: JT (Joint Transmission), DPS (Dynamic Point Selection), and CS/CB (Coordinated Scheduling/Coordinated Beamforming) (see NPL 1). JT, as shown in FIG. 1A, is a scheme in which signal transmission is simultaneously performed by multiple transmission points, enhancing characteristics. DPS, as shown in FIG. 1B, is a scheme in which a transmission point with good channel quality is selected to instantaneously switch thereto, enhancing characteristics. CS/CB, as shown in FIG. 1C, is a scheme in which among CoMP transmission target UEs (User Equipments, or also referred to as mobile stations), transmission points select UEs to allocate (schedule) them radio resources in coordination with each other so that interference between adjacent transmission points will be reduced, enhancing characteristics.

In the meantime, it is known that an optimum CoMP scheme and an optimum coverage and number of coordinating transmission points depend on traffic volume, UE distribution and the like and vary with time (see NPL 2). Accordingly, in order to increase the improvement effect brought about by CoMP transmission, it is necessary to change the CoMP transmission scheme and the coverage and number of coordinating transmission points in response to traffic volume and UE distribution.

In the case where no CoMP transmission is applied, one-to-one communication between a transmission point and a UE is performed. The UE therefore only feeds back information about the channel state (Channel State Information; hereinafter, referred to as CSI) between the one transmission point and the UE. CSI includes an indicator indicating channel quality CQI (Channel Quality Indicator), information regarding a channel co-variance matrix (channel co-variance information), an indicator indicating an optimum precoding matrix PMI (Precoding Matrix Indicator), an indicator indicating an optimum rank RI (Rank Indicator), and the like.

On the other hand, in the case where CoMP transmission is applied, multiple points transmit signals to a UE. Accordingly, the UE needs to notify channel state information on each of the multiple transmission points through feedback. In 3GPP, the following three feedback methods are being discussed with respect to feedback for CoMP transmission (see NPL 3).

In the first feedback method, a UE notifies a network of information about the channel state between the UE and each transmission point. This method is also called per transmission point (TP) CSI feedback or per CSI RS resource feedback. Here, "CSI RS" is a reference signal for measurement of CSI and is considered to be sent by using resources that are orthogonal between each transmission point. This first feedback method can be applied to DPS and CS/CB.

In the second feedback method, a channel phase difference between each transmission point is notified through feedback, in addition to the channel state information notified through feedback in the first feedback method. This method is also called per transmission point CSI feedback with inter transmission point (TP) CSI feedback or per CSI RS resource with inter CSI RS resource feedback. Each transmission point adjusts the phase based on a fed-back phase difference before transmitting a signal, allowing the UE to combine signals in phase. The second feedback method can be applied to Coherent JT, in which signals from multiple transmission points are combined in phase as descried above.

In the third feedback method, when transmission points perform simultaneous transmission, their aggregated channel state information is notified through feedback. This method is also called aggregated CSI feedback or aggregated feedback across multiple CSI RS resources. This third feedback method can be applied to Coherent JT and Non-Coherent JT, in which signals of transmission points are combined as they are left out of phase.

As described above, a suitable one of the feedback methods can be employed depending on the CoMP transmission scheme applied. Accordingly, when CoMP transmission is applied, it is necessary to share reporting setting information between transmission points (a network) and a UE, wherein the reporting setting information sets a combination of reporting-target transmission points (hereinafter, referred to as a reporting set), a feedback method, and the like.

There has been proposed, as an example of a method for sharing such reporting setting information, a method in which a reporting set is notified from transmission points to a UE by using RRC (Radio Resource Control) signaling (see NPL 4). Referring to FIG. 1D, in a network including a UE and three transmission points TP1, TP2, and TP3 that coordinate with each other with respect to the UE, it is assumed that the transmission points TP1 and TP2 are selected as CSI feedback destinations. First, the network semi-statically notifies the UE by using RRC signaling that a reporting set includes TP1 and TP2. The UE notified of the reporting set, measures CSI for TP1 and TP2 and notifies TP1 and TP2 of the measured CSI by feedback.

### [Citation List]

### [Non-patent Literature]

[NPL 1]
   3GPP TR.36.819, "Coordinated multi-point operation for LTE physical layer aspects (Section 5.1.3)"
[NPL 2]
   3GPP R1-112224, "CoMP Performance Analysis in Scenario 3 and 4 for non full buffer traffic model," Intel
[NPL 3]
   3GPP R1-114352, "Final Report of 3GPP TSG RAN WG1 #66bis v1.1.0 (Section 7.5.2)"
[NPL 4]
   3GPP R1-113354, "Hierarchical Feedback for DL CoMP and DL MIMO," Ericsson, ST-Ericsson

### [Summary of Invention]

### [Technical Problem]

However, RRC signaling is a means for notifying control information related to the RRC layer and, since it notifies in a semi-static manner (at a cycle of approximately 100 ms at minimum), cannot follow environmental changes such as changes in traffic volume and UE distribution. Accordingly, an optimum reporting setting cannot be achieved. Hence, the above-mentioned reporting setting method according to NPL 4 has the problem that the characteristic improvement effect brought about by CoMP transmission is lessened.

An object of the present invention is to provide a method for controlling a reporting setting by which reporting setting can be quickly changed in a system where CoMP transmission is performed, as well as a wireless communications system using the same.

### [Solution to Problem]

A wireless communications network according to the present invention is a wireless communications system based on a coordinated transmission scheme in which multiple transmission stations included in a network perform transmission in coordination with each other, characterized in that the network notifies multiple pieces of reporting setting information for channel state information to a reception station that is a target of the coordinated transmission scheme, and the transmission stations and the reception station share reporting setting information to be applied, of the multiple pieces of reporting setting information.

A mobile station according to the present invention is a mobile station to be a target of a coordinated transmission scheme in a wireless communications system based on the coordinated transmission scheme in which multiple transmission stations included in a network perform transmission in coordination with each other, characterized by comprising: reception means for receiving multiple pieces of reporting setting information for channel state information from the network; and control means for sharing reporting setting information to be applied, among the multiple pieces of reporting setting information, with the transmission stations.

A radio base station according to the present invention is a radio base station in a wireless communications system based on a coordinated transmission scheme, wherein the radio base station performs transmission to mobile stations in coordination with other radio base stations included in a network, characterized by comprising: transceiver means for performing wireless communication with a mobile station that is a target of the coordinated transmission scheme; and control means for notifying the mobile station of multiple pieces of reporting setting information for channel state information and sharing reporting setting information to be applied, among the multiple pieces of reporting setting information, with the mobile station.

A method for controlling reporting setting according to the present invention is a method for controlling reporting setting in a wireless communications system based on a coordinated transmission scheme in which multiple transmission stations included in a network perform transmission in coordination with each other, characterized by comprising: by the network, notifying multiple pieces of reporting setting information for channel state information to a reception station that is a target of the coordinated transmission scheme; and by the transmission stations and the reception station, sharing reporting setting information to be applied among the multiple pieces of reporting setting information.

### [Advantageous Effects of Invention]

According to the present invention, in a system where CoMP transmission is performed, multiple pieces of reporting setting information are notified to a reception station that is a CoMP transmission target, whereby reporting setting can be quickly changed, thus enabling reporting setting to follow changes in traffic volume and UE distribution.

The invention is defined by the independent claims. Preferred embodiments are provided by dependent claims. to fall within the scope of the appended claims.

### [Brief Description of Drawings]

[FIG. 1]
   FIGS. 1A, 1B, and 1C are schematic network diagrams showing CoMP transmission schemes JT, DPS, and CS/CB, respectively, and FIG. 1D is a network diagram for describing a method for notifying a reporting set.
[FIG. 2]

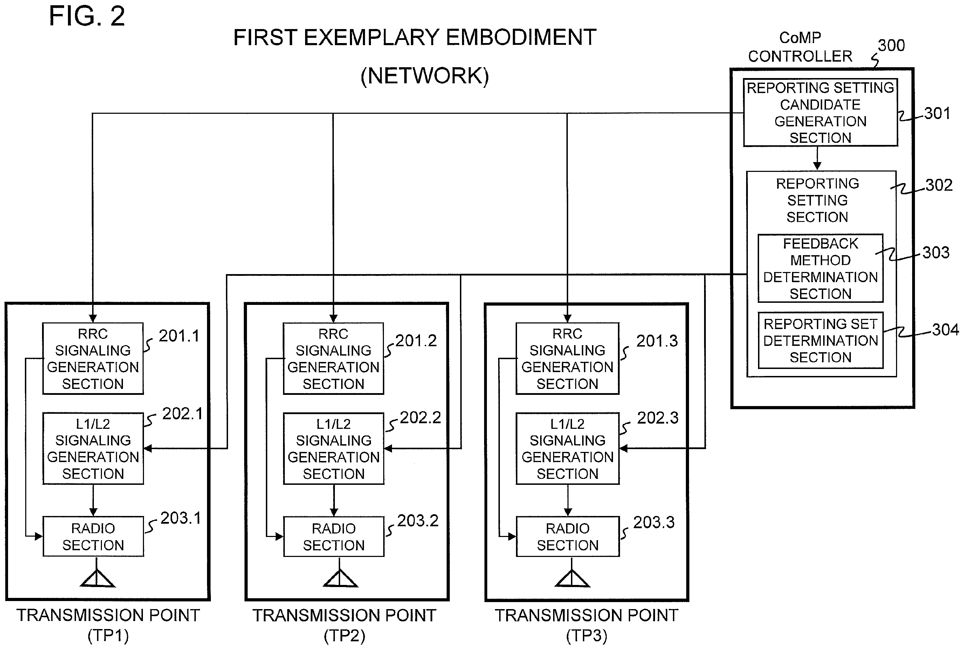

   FIG. 2 is a block diagram showing a configuration of principal functions on a network side in a wireless communications system according to a first exemplary embodiment of the present invention.
[FIG. 3]

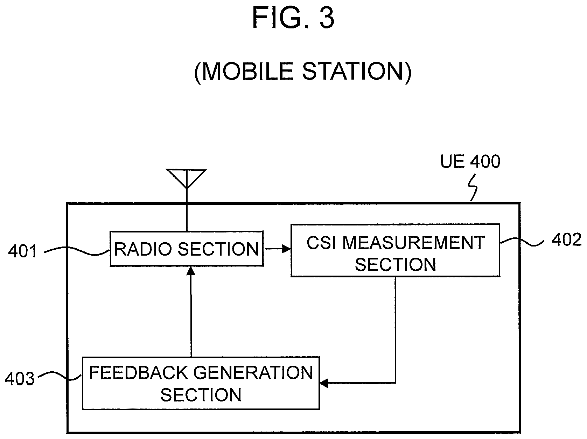

   FIG. 3 is a block diagram showing a configuration of principal functions of a mobile station in the wireless communications system shown in FIG. 2.
[FIG. 4]

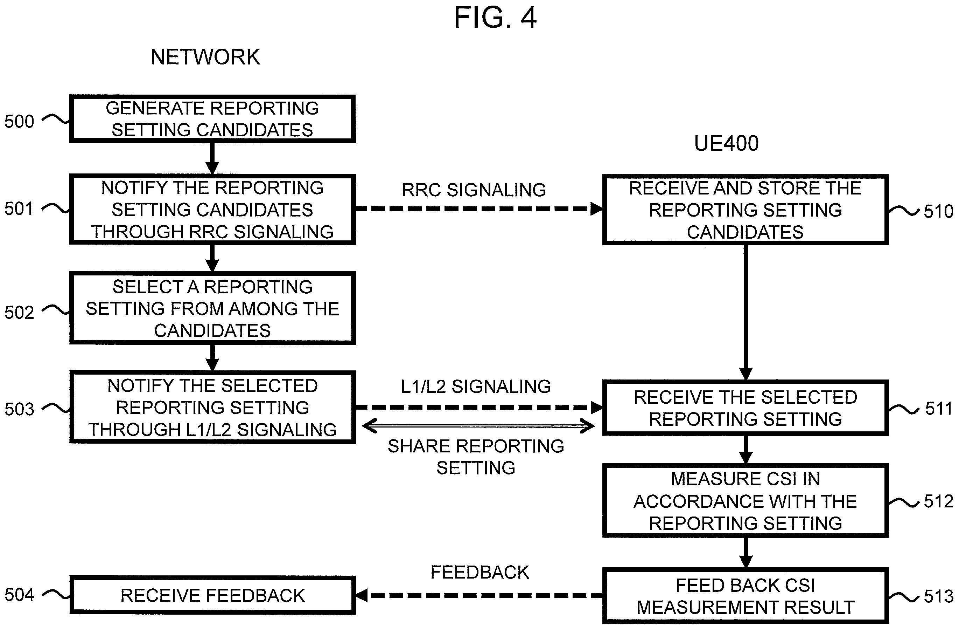

   FIG. 4 is a flowchart showing network-side and mobile station-side control operations in the wireless communications system shown in FIG. 2.
[FIG. 5]

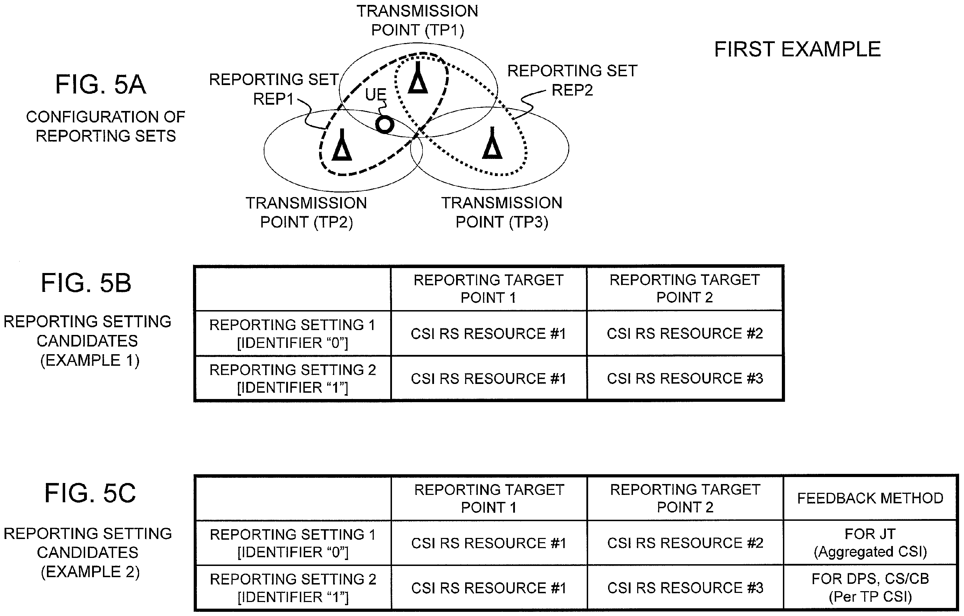

   FIG. 5A is a network diagram for describing a first example of a method for controlling reporting setting in the wireless communications system shown in FIG. 2, FIG. 5B is a diagram showing an example of reporting setting candidates for which RRC signaling is performed, and FIG. 5C is a diagram showing another example of reporting setting candidates.
[FIG. 6]

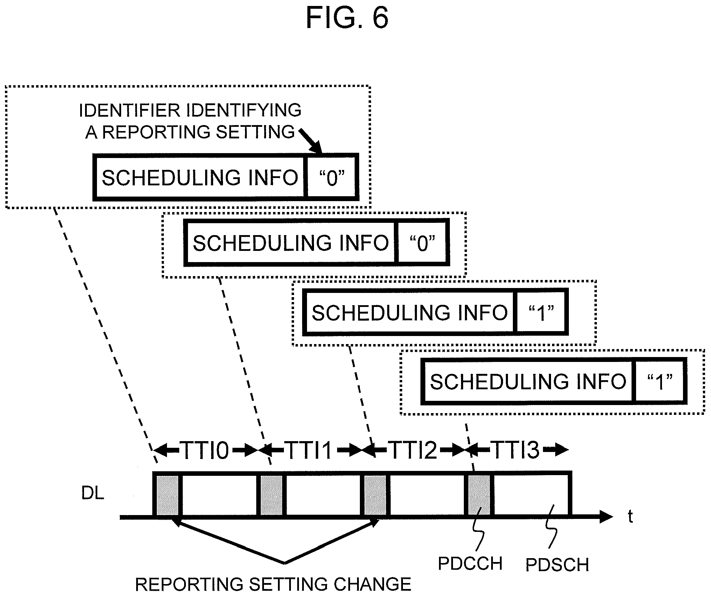

   FIG. 6 is a schematic diagram for describing a method for notifying a reporting setting through L1/L2 signaling in the first example shown in FIG. 5.
[FIG. 7]

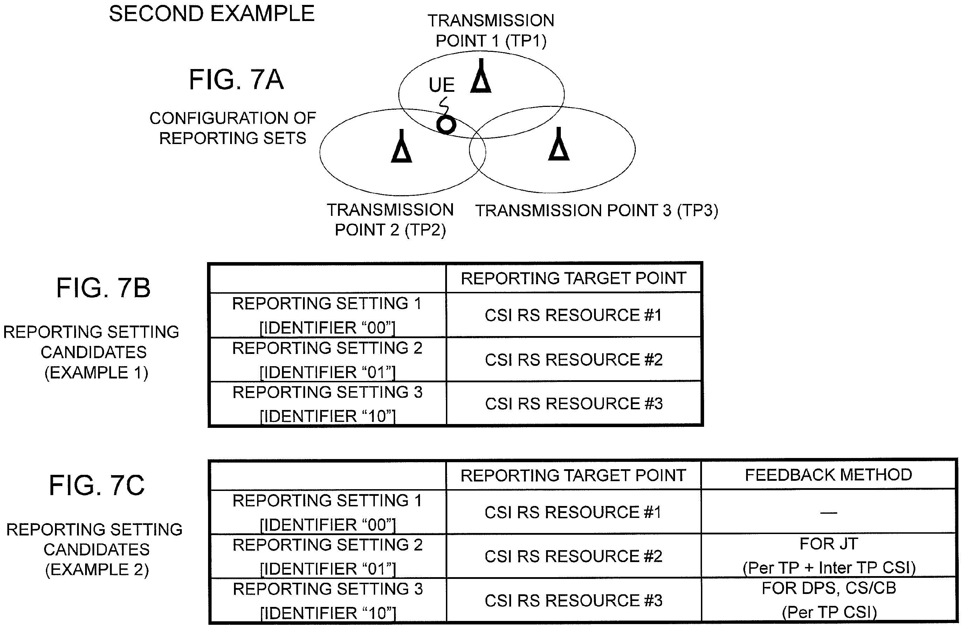

   FIG. 7A is a network diagram for describing a second example of the method for controlling reporting setting in the wireless communications system shown in FIG. 2, FIG. 7B is a diagram showing an example of reporting setting candidates for which RRC signaling is performed, and FIG. 7C is a diagram showing another example of reporting setting candidates.
[FIG. 8]

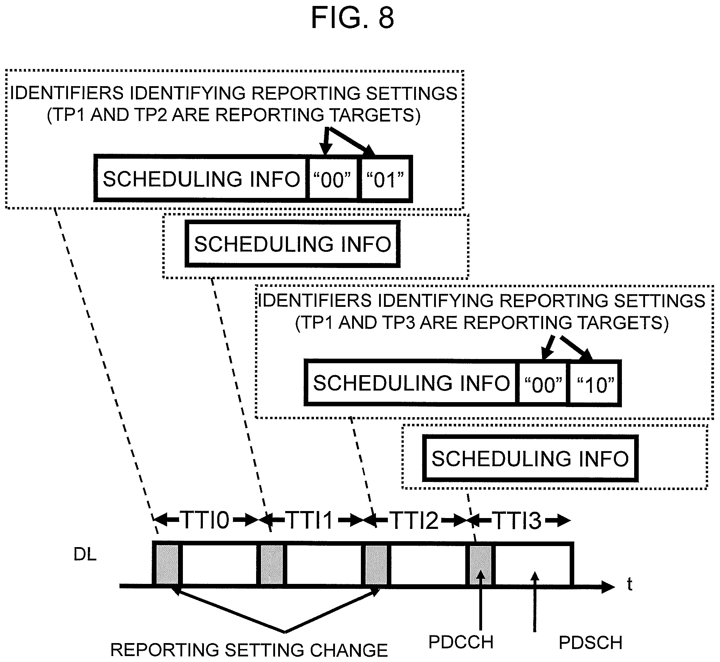

   FIG. 8 is a schematic diagram for describing a method for notifying a reporting setting through L1/L2 signaling in the second example shown in FIG. 7.
[FIG. 9]

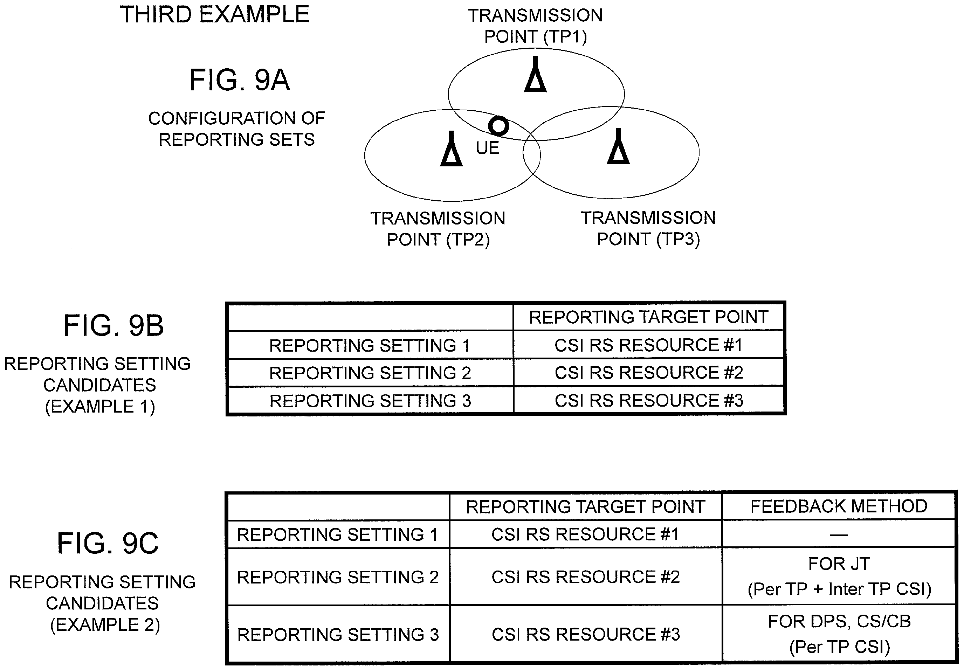

   FIG. 9A is a network diagram for describing a third example of the method for controlling reporting setting in the wireless communications system shown in FIG. 2, FIG. 9B is a diagram showing an example of reporting setting candidates for which RRC signaling is performed, and FIG. 9C is a diagram showing another example of reporting setting candidates.
[FIG. 10]

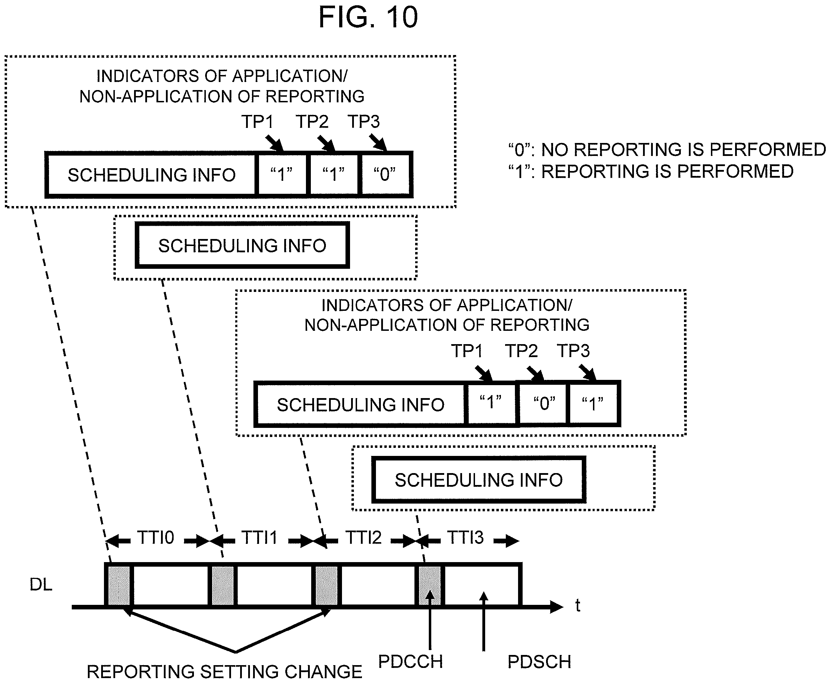

   FIG. 10 is a schematic diagram for describing a method for notifying a reporting setting through L1/L2 signaling in the third example shown in FIG. 9.
[FIG. 11]

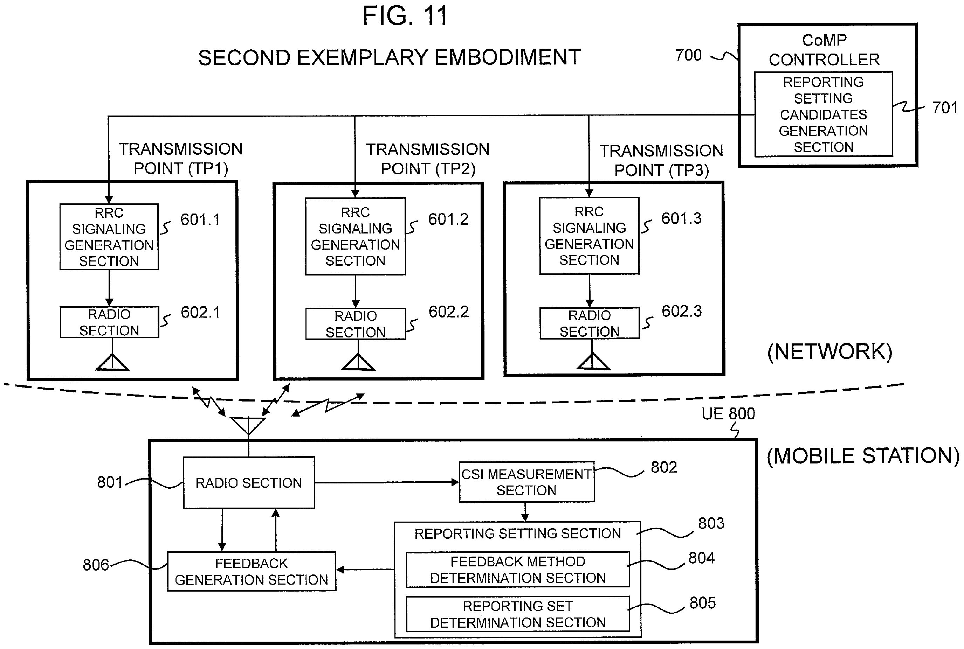

   FIG. 11 is a block diagram showing configurations of principal functions of a network and a mobile station in a wireless communications system according to a second exemplary embodiment of the present invention.
[FIG. 12]

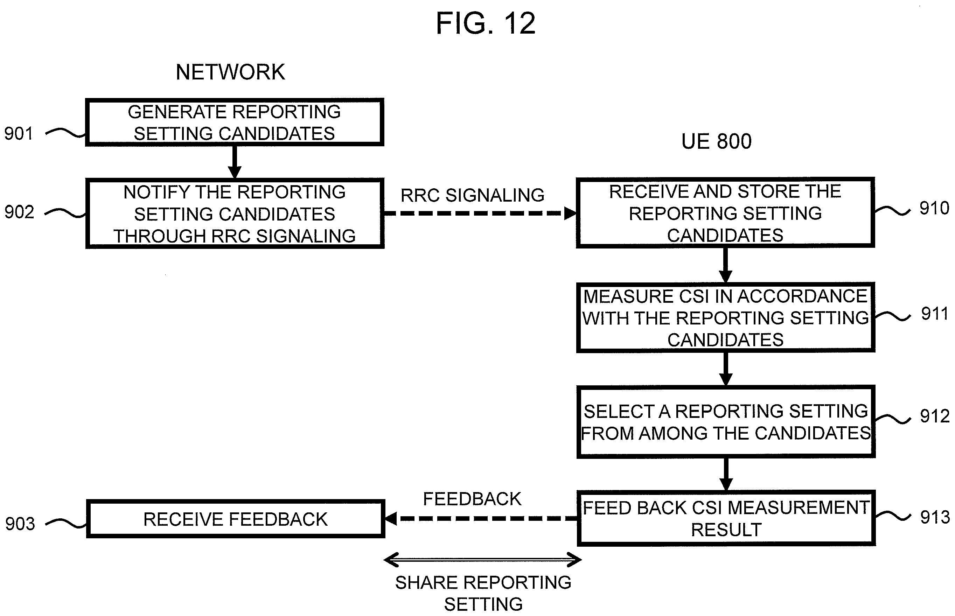

   FIG. 12 is a flowchart showing network-side and mobile station-side control operations in the wireless communications system shown in FIG. 11.
[FIG. 13]

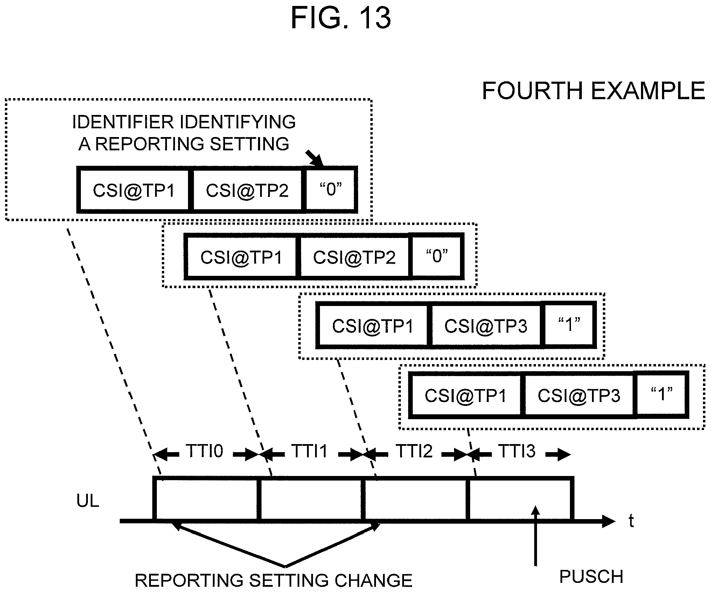

   FIG. 13 is a schematic diagram showing a feedback method according to a fourth example of a method for controlling reporting setting in the wireless communications system shown in FIG. 11.
[FIG. 14]

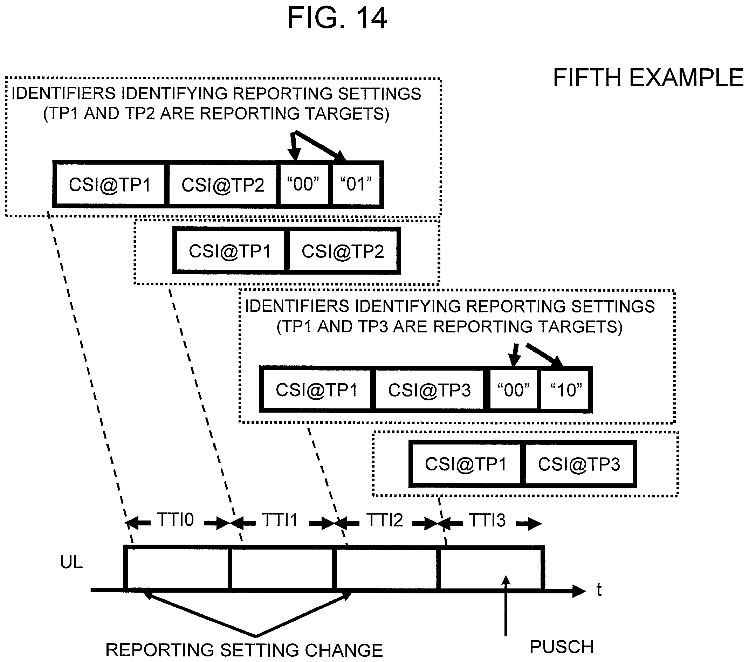

   FIG. 14 is a schematic diagram showing a feedback method according to a fifth example of the method for controlling reporting setting in the wireless communications system shown in FIG. 11.
[FIG. 15]

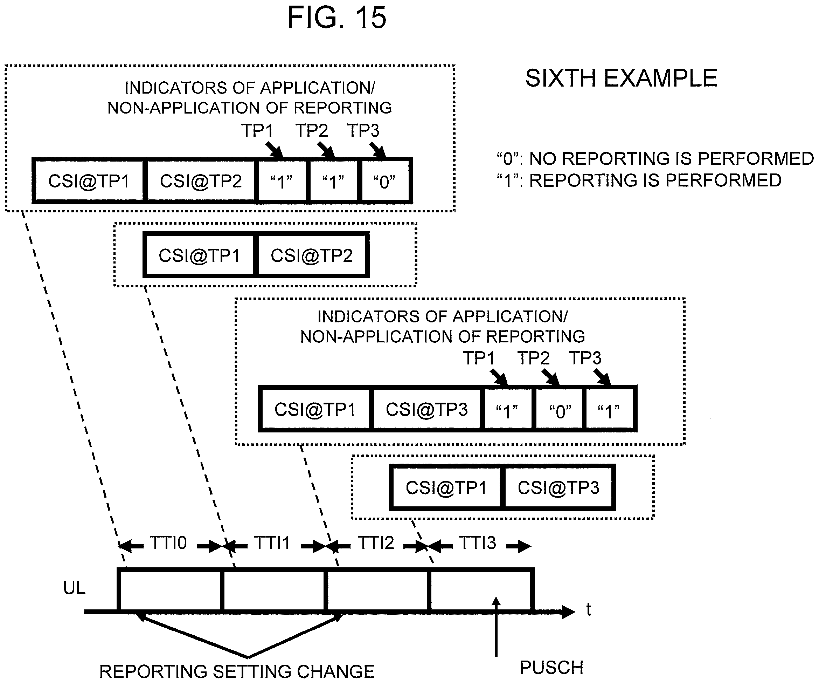

   FIG. 15 is a schematic diagram showing a feedback method according to a sixth example of the method for controlling reporting setting in the wireless communications system shown in FIG. 11.
[FIG. 16]

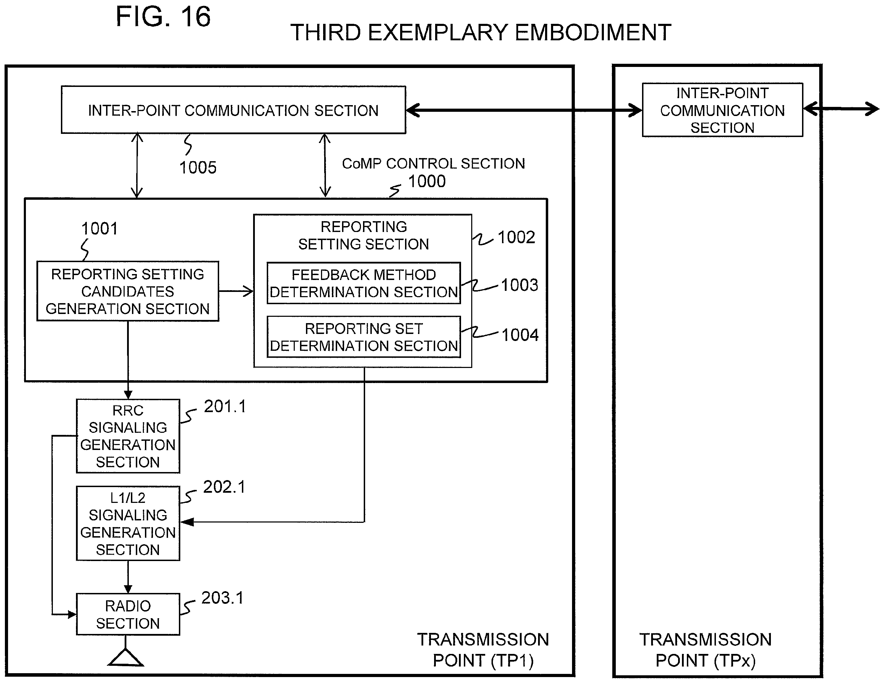

   FIG. 16 is a block diagram showing configurations of principal functions of a network and a mobile station in a wireless communications system according to a third exemplary embodiment of the present invention.

### [Description of Embodiments]

According to the present invention, a network notifies a mobile station of multiple pieces of reporting setting information for channel state information, and among them, reporting setting information to be applied is shared between the network and the mobile station. Thus, reporting setting can be quickly changed according to changes in the wireless environment, enabling reporting setting to be optimized for changes in traffic volume and UE distribution in the network. Consequently, it is possible to increase the characteristic improvement effect of CoMP transmission. Hereinafter, exemplary embodiments and examples of the present invention will be described in detail with reference to drawings.

### 1. First exemplary embodiment

According to a first exemplary embodiment of the present invention, reporting setting is implemented through two-step signaling. In the first step, information about multiple reporting settings is notified from transmission points to a UE through RRC signaling. In the second step, information about a reporting setting to be applied is notified from the transmission points to the UE through Layer 1/Layer 2 (L1/L2) signaling. Note that L1/L2 signaling is a control signal related to the physical layer, for which an updating cycle of several milliseconds (ms) is assumed. Since the cycle of RRC signaling is approximately 100 ms at minimum, intervals of notification by RRC signaling is longer than intervals of notification by L1/L2 signaling. Accordingly, reporting setting can be changed according to changes in the radio status, network load, and the like, by notifying a UE of multiple candidates for reporting setting at the notification intervals of certain signaling, and then deciding which candidate will be applied through signaling that has shorter notification intervals.

### 1.1) System configuration

Referring to FIG. 2, a system according to the first exemplary embodiment of the present invention includes a CoMP controller 300 and multiple transmission points TP, wherein the CoMP controller 300 performs reporting setting control for the multiple transmission points TP. Here, to avoid complicating description, three transmission points are provided. Although only transmission points TP are shown in the drawing, it is assumed that transceiver sections, radios sections, or radio base stations including the transmission points TP are provided. A functional configuration of a mobile station UE, which performs wireless communication with each transmission point TP, is shown in FIG. 3.

The CoMP controller 300 includes a reporting setting candidate generation section 301 and a reporting setting section 302. The reporting setting section 302 includes a feedback method determination section 303 and a reporting set determination section 304. The CoMP controller 300 further includes a control section (not shown), which controls reporting setting operations, which will be described later. The transmission points TP1-TP3 are provided with RRC signaling generation sections 201.1-201.3, respectively, L1/L2 signaling generation sections 202.1-202.3, respectively, and radio sections 203.1-203.3, respectively.

The reporting setting candidate generation section 301 of the CoMP controller 300 generates multiple reporting setting candidates to be notified to the UE through RRC signaling, and outputs them to the reporting setting section 302 and each of the RRC signaling generation sections 201.1-201.3 of the transmission points. The reporting setting section 302 determines a reporting setting to be actually used among the reporting setting candidates input from the reporting setting candidate generation section 301. Specifically, the feedback method determination section 303 determines a feedback method corresponding to a CoMP transmission scheme to be used, and the reporting set determination section 304 determines reporting-target transmission points. The reporting setting determined by the reporting setting section 302 is sent to each of the L1/L2 signaling generation sections 202.1-202.3 of the transmission points.

At each transmission point, the RRC signaling generation sections 201.1-201.3 generate, as information in RRC signaling, information about the reporting setting candidates input from the reporting setting candidate generation section 301 and outputs it to the radio sections 203.1-203.3. The radio sections 203.1-203-3 notify the UE of the input information about the reporting setting candidates by using RRC signaling.

The respective L1/L2 signaling generation sections 202.1-202-3 of the transmission points generate, as information in L1/L2 signaling, the reporting setting received from the reporting setting section 302 and output it to the radio sections 203.1-203.3. The radio sections 203.1-203.3 notify the UE of the reporting setting by using L1/L2 signaling.

Referring to FIG. 3, the UE 400, which is a mobile station in the system according to the present exemplary embodiment, includes a radio section 401, a CSI measurement section 402, and a feedback generation section 403, and further includes a control section (not shown) that controls reporting setting operation. The radio section 401 receives RRC signaling and L1/L2 signaling from the transmission points and outputs reporting setting related information to the CSI measurement section 402. The CSI measurement section 402 measures CSI in accordance with the input reporting setting related information and outputs a result of the measurement to the feedback generation section 403. Note that CSI includes an indicator indicating channel quality (CQI: Channel Quality Indicator), information regarding a channel co-variance matrix (channel co-variance information), an indicator indicating an optimum precoding matrix (PMI: Precoding Matrix Indicator), an indicator indicating an optimum rank (RI: Rank Indicator), and the like. The feedback generation section 403 generates a feedback signal from the input result of the CSI measurement and outputs it to the radio section 401. The radio section 401 notifies the CSI to the network (radio sections or radio base stations including the transmission points) through feedback.

### 1.2) System operation

Next, a description will be given of operations of the network (CoMP controller and transmission points) and the UE in the first exemplary embodiment, with reference to FIG. 4.

Referring to FIG. 4, first, the reporting setting candidate generation section 301 of the CoMP controller 300 generates multiple reporting setting candidates (Operation 500) and sends them to the UE 400 via the transmission points TP through RRC signaling (Operation 501). The radio section 401 of the UE 400 reads information about the reporting setting candidates from the RRC signaling received from the transmission points TP, and the CSI measurement section 402 stores these reporting setting candidates (Operation 510).

Next, at the network, a reporting setting to be actually used is selected from among the reporting setting candidates (Operation 502). In the present exemplary embodiment, the network determines a reporting setting by using information that is already known to the network side. For example, a reporting setting to be applied is determined based on the traffic volume or the like at each transmission point.

Next, the selected reporting setting is notified to the UE 400 through L1/L2 signaling (Operation 503), and the UE 400 receives the notified reporting setting (Operation 511), whereby the reporting setting is shared between the network side and the UE side. The UE 400 measures CSI in accordance with the notified reporting setting (Operation 512) and notifies the measured CSI to the network through feedback (Operation 513). The radio sections or radio base stations including the transmission points TP on the network side receive information about the CSI notified through feedback (Operation 504).

### 1.3) First example

According to a first example in the above-described first exemplary embodiment, the network notifies the UE of multiple reporting settings through RRC signaling, selects one reporting setting to be applied from among the multiple reporting settings, and notifies the UE of an identifier identifying the selected reporting setting through L1/L2 signaling. As described earlier, a reporting setting includes information about a combination of reporting-target transmission points (reporting set) and about a feedback method used for the reporting set.

Hereinafter, RRC signaling for notifying multiple reporting settings will be described with reference to FIG. 5. A description will be given of a case, as an example, where there is one UE, for which three transmission points (TP1, PT2, and PT3) coordinate with each other as shown in FIG. 5A. Here, two reporting setting candidates are defined, of which a reporting setting 1 has TP1 and PT2 as a reporting set REP1, and a reporting setting 2 has TP1 and PT3 as a reporting set REP2.

FIG. 5B shows an example of a signal format used when information about multiple reporting settings is notified through RRC signaling. The reporting setting information is, for example, information included in CQI-ReportingConfig, containing information about reporting intervals and a feedback method (also referred to as a feedback mode) and the like. Moreover, CQI-ReportingConfig contains, as information identifying transmission points, CSI RS source numbers, PCIs (Physical Cell IDs), or the like. Here, a description will be given by using an example in which CSI RS resource numbers are used for information identifying the respective transmission points. CSI RS is a reference signal for measurement of CSI and is considered to be sent by using resources that are orthogonal between each transmission point. CSI RS resources #1, #2, and #3 are identifiers to identify the resource locations for CSI RSs transmitted by TP1, TP2, and TP3, respectively. 3GPP currently prepares a maximum of 32 patterns of CSI RS resources that are orthogonal in time, frequency, or code. The individual resources correspond to CSI RS resource numbers. Since CSI RS resources and their numbers are known to the network and UE sides, the UE can find which CSI RS resource it should measure for CSI if the network notifies the UE of a CSI RS resource number. Here, an identifier used at the time of L1/L2 signaling is assigned to each reporting setting candidate. In this example, an identifier "0" is assigned to the reporting setting 1, while an identifier "1" is assigned to the reporting setting 2.

FIG. 5C shows another example of a signal format used when multiple reporting settings are notified through RRC signaling. In this example, a reporting setting includes not only a reporting set REP but also a feedback method. Here, aggregated CSI, which is a feedback method for perming the CoMP transmission scheme JT, is set for the reporting set REP1 including TP1 and TP2, while per TP CSI, which is a feedback method for performing the CoMP transmission scheme DPS or CS/CB, is set for the reporting set REP2 including TP1 and TP3. Note that although CSI RS resource numbers are used for information to identify the individual transmission points, PCIs (Physical Cell IDs) or the like can also be used. Moreover, although a description is given assuming that the number of coordinating transmission points = 3 in the present example, the present example is applicable if the number is 2 or greater. Similarly, although a description is given of a case where the number of reporting setting candidates = 2, the present example is also applicable even if the number is 3 or greater.

Referring to FIG. 6, in the first example, a selected reporting setting is notified through L1/L2 signaling. Information in downlink L1/L2 signaling is called DCI (Downlink Control Information) and is transmitted over PDCCH (Physical Downlink Control Channel). DCI includes scheduling information, which specifies the location of a resource assigned to each UE, MCS (Modulation Coding Scheme) information, which indicates a modulation scheme and a coding rate, and the like. In the first example, the identifier "0" or "1," which identifies a reporting setting, is inserted in DCI at every TTI (Transmission Time Interval). Accordingly, the identifier "0" identifying the reporting setting 1 is notified at TTI0 and TTI1, and the identifier "1" identifying the reporting setting 2 is notified at TTI2 and TTI3.

In the first example, since the identifier of one of multiple reporting settings is notified through L1/L2 signaling, the overhead of L1/L2 signaling at each TTI can be made smaller. Note that although an identifier identifying a reporting setting is inserted at every TTI in the first example, an identifier identifying a reporting setting may be inserted only at TTIs when reporting setting is changed (for example, only at TTI0 and TTI2).

### 1.4) Second example

Differences between a second example, which will be described below, and the above-described first example in the first exemplary embodiment are as follows. In RRC signaling of the first example, reporting sets and feedback methods for the reporting sets are notified to a UE. In the second example, however, reporting-target transmission points and feedback methods for the transmission points are notified. Moreover, in L1/L2 signaling of the first example, notified is the identifier of a selected one of reporting settings, which includes a combination of multiple transmission points. In the second example, however, only information about a reporting setting to be applied, among respective reporting settings for the individual transmission points notified through RRC signaling, is notified to a UE.

Referring to FIG. 7A, a description will be given of a case, as an example, where there is one UE, for which three transmission points (TP1, TP2, and PT3) coordinate with each other. In the second example, a reporting set includes TP1 in a reporting setting 1, TP2 in a reporting setting 2, and TP3 in a reporting setting 3.

FIG. 7B shows an example of a signal format used when reporting setting candidates are notified through RRC signaling. Here, CSI RS resource numbers are used for information to identify the individual transmission points, and identifiers to be used at the time of L1/L2 signaling are assigned to the individual transmission points. In this example, identifiers "00," "01," and "10" are assigned to the reporting settings 1, 2, and 3, respectively.

FIG. 7C shows another example of a signal format used when reporting setting candidates are notified through RRC signaling. In FIG. 7C, not only transmission points but also feedback methods are included. Here, assuming that TP1 is a serving transmission point, a feedback between the serving transmission point and the UE is set in the reporting setting 1; per TP CSI and inter TP CSI, which are feedback methods for performing JT, are set in the reporting setting 2; per TP CSI, which is a feedback method for performing CS/CB, is set in the reporting setting 3. Although CSI RS resource numbers are used for information to identify the individual transmission points here, PCIs (Physical Cell IDs) or the like can also be used.

Referring to FIG. 8, the identifiers of applied reporting settings only are notified through L1/L2 signaling when reporting setting is updated. Accordingly, the identifiers "00" and "01" identifying the reporting settings 1 and 2 are transmitted at TTI0, and the identifiers "00" and "10" identifying the reporting settings 1 and 3 are transmitted at TTI2 when reporting setting is updated to the reporting setting 2.

Note that although a new identifier is assigned to each reporting setting in the second example, existing information such as a CSI RS resource number or PCI can also be used for the identifier of a reporting setting. Moreover, in the second example, identifiers identifying reporting settings are transmitted only at TTIs when reporting setting is changed (only at TTI0 and TTI2). However, identifiers identifying reporting settings may be inserted at every TTI as in the first example.

Additionally, according to the second example, since a reporting setting can be configured for each transmission point, it is possible to suppress an increase in the overhead of RRC signaling even if the number of elements in a reporting set grows.

### 1.5) Third example

According to a third example, which will be described below, reporting-target transmission points and feedback methods for the transmission points are notified through RRC signaling, as in the above-described second example. A difference from the second example is the method of L1/L2 signaling. In the second example, only information about reporting settings to be applied, among respective reporting settings for the individual transmission points notified through RRC signaling, is notified. In the third example, however, an indicator of whether or not a reporting setting is applied is notified with respect to each of multiple reporting settings. Hereinafter, a description will be given with reference to FIGS. 9 and 10.

Referring to FIG. 9A, reporting sets in the third example are configured as in the above-described second example, and therefore a description thereof will be omitted.

FIG. 9B shows an example of a signal format used when reporting setting candidates are notified through RRC signaling. Here, CSI RS resource numbers are used for information to identify the individual transmission points. In the third example, since application or non-application of reporting is sent with respect to all reporting setting candidates, it is not necessary to attach a unique identifier to each reporting setting unlike the first or second example.

FIG. 9C shows another example of a signal format used when reporting setting candidates are notified through RRC signaling. In this example, not only transmission points but also feedback methods are included. Assuming that TP1 is a serving transmission point, an existing feedback between the serving transmission point and the UE is set in a reporting setting 1; a feedback method for performing JT is set in a reporting setting 2; a feedback method for performing CS/CB is set in a reporting setting 3.

FIG. 10 shows an example in which an indicator of whether or not reporting is performed is notified for each of the multiple reporting settings through L1/L2 signaling when reporting setting is updated. In this example, it is assumed that an indicator "0" indicates that no reporting is performed, while an indicator "1" indicates that reporting is performed, and that notification thereof is made with respect to the reporting settings 1, 2, and 3 in this order. Accordingly, at TTI0, since it is notified that the reporting settings 1 and 2 are applied, the indicators "1," "1," and "0" are transmitted in this order. At TTI2, since reporting setting is updated to the reporting settings 1 and 3, the indicators "1," "0," and "1" are transmitted in this order.

Note that although a description is given in the third example by using an example where notification for the individual reporting settings is made in the fixed order of the reporting settings 1, 2, and 3, existing information such as CSI RS resource numbers or PCIs may be transmitted as the identifiers of the reporting settings at the same time.

Moreover, in the third example, the indicators indicating reporting setting are transmitted only at TTIs when reporting setting is changed (only at TTI0 and TTI2). However, the indicators indicating reporting setting may be inserted at every TTI as in the first example.

Further, according to the third example, since a reporting setting can be configured for each transmission point as in the second example, it is possible to suppress an increase in the overhead of RRC signaling. Furthermore, since indicators with respect to all of the multiple reporting settings are notified through L1/L2 signaling, the overhead of RRC signaling can be made smaller than that of the second example.

### 1.6) Modification example

The above-described first to third examples show examples in which L1/L2 signaling is performed by using PDCCH (Physical Downlink Control Channel). However, other channels such as PDSCH (Physical Downlink Shared Channel) can also be used.

Moreover, the first exemplary embodiment has the advantage that the overhead of L1/L2 signaling can be suppressed by notifying multiple reporting setting candidates through RRC signaling. Further, the network can optimize reporting setting by using information that is already known to the network side.

### 2. Second exemplary embodiment

In a system according to a second exemplary embodiment of the present invention, information about multiple reporting settings is notified from transmission points to a UE by using RRC signaling in the first step as in the first exemplary embodiment, but the second step is different from that of the first exemplary embodiment. In the first exemplary embodiment, information about a reporting setting to be applied is notified from the network to the UE. In the second exemplary embodiment, however, information about a reporting setting to be applied is notified from the UE to the transmission points through feedback. Note that an updating cycle of approximately several to several tens milliseconds is assumed for feedback. Since the minimum cycle of RRC signaling is approximately 100 ms, intervals of notification by RRC signaling are longer than time intervals of feedback. Accordingly, it is possible to notify multiple reporting setting candidates to the UE at the notification intervals of certain signaling and to determine, depending on changes in the radio status, which candidate is applied, by using signaling that has shorter notification intervals. Hereinafter, the second exemplary embodiment of the present invention will be described with reference to FIGS. 11 and 12.

### 2.1) System configuration

Referring to FIG. 11, the system according to the second exemplary embodiment of the present invention includes a CoMP controller 700, multiple transmission points TP, and a UE 800 that is a user terminal. The CoMP controller 700 notifies reporting setting candidates to the UE through RRC signaling, and the UE determines one candidate to be applied from among the notified candidates and feeds it back to the transmission points. Here, to avoid complicating description, three transmission points are configured, and only transmission points TP at the respective transmission points are shown in the drawing.

The CoMP controller 700 includes a reporting setting candidate generation section 701, while the transmission points TP1-TP3 includes RRC signaling generation sections 601.1-601.3, respectively, and radio sections 602.1-602.3, respectively.

The reporting setting candidate generation section 701 of the CoMP controller 700 generates reporting setting candidates for CSI to be notified to the UE 800 through RRC signaling and outputs them to each of the RRC signaling generation sections 601.1-601.3 of the transmission points. At each transmission point, the respective RRC signaling generation sections 601.1-601.3 generate information about the reporting setting candidates input from the reporting setting candidate generation section 701 as information in RRC signaling and output it to the radio sections 602.1-602.3. The radio sections 602.1-602.3 notify the input information about the reporting setting candidates to the UE 800 by using RRC signaling.

The UE 800 according to the present exemplary embodiment includes a radio section 801, a CSI measurement section 802, a reporting setting section 803, and a feedback generation section 806. The reporting setting section 803 includes a feedback method determination section 804 and a reporting set determination section 805. The radio section 801 receives RRC signaling from the transmission points and outputs reporting setting related information to the CSI measurement section 802. The CSI measurement section 802 measures CSI in accordance with the input reporting setting related information and outputs a result of the measurement to the reporting setting section 803. Note that CSI includes an indicator indicating channel quality (CQI: Channel Quality Indicator), information regarding a channel co-variance matrix (channel co-variance information), an indicator indicating an optimum precoding matrix (PMI: Precoding Matrix Indicator), an indicator indicating an optimum rank (RI: Rank Indicator), and the like.

The reporting setting section 803, when receiving the setting candidates generated by the reporting setting candidate generation section 701 via the transmission points, determines a setting to be actually applied. The feedback method determination section 804 determines a feedback method corresponding to a CoMP transmission scheme to be used, and the reporting set determination section 805 determines transmission points that are to be reporting targets. The reporting setting section 803 outputs a CSI measurement result corresponding to the determined setting to the feedback generation section 806, which then based on the input CSI measurement result generates a feedback signal, which is then transmitted to the network (transmission points) by the radio section 801.

2.2) System operation

Referring to FIG. 12, first, the CoMP controller 700 on the network side generates reporting setting candidates (Operation 901). Next, the generated reporting setting candidates are notified from the transmission points to the UE through RRC signaling (Operation 902).

The UE 800 on the user terminal side, when receiving the RRC signaling, identifies the reporting setting candidates from the received signal and stores them (Operation 910). Subsequently, the UE 800 performs CSI measurement in accordance with information about the reporting setting candidates (Operation 911) and selects a setting to be used for actual reporting from among the candidates (Operation 912). In the second exemplary embodiment, the UE 800 determines a reporting setting by using information that is already known to the UE side. For example, a reporting setting can be determined based on a difference in receive power between the transmission points participating in CoMP transmission or the like. The UE 800, in accordance with the thus selected reporting setting, feeds back CSI along with information for identifying the selected reporting setting to the network side (Operation 913), and the transmission points on the network side receive such information through feedback (Operation 903), whereby the reporting setting is shared between the transmission points and the UE.

### 2.3) Fourth example

A description will be given of a fourth example in the above-described second exemplary embodiment. In the fourth example, the network notifies multiple reporting settings to the UE 800 through RRC signaling, and the UE 800 from among them selects one reporting setting to be applied and notifies an identifier identifying the selected reporting setting to the network side through feedback. A reporting setting includes information about a combination of reporting-target transmission points (a reporting set) and a feedback method for the reporting set, as described already. Note that RRC signaling used to notify multiple reporting settings is as described in the first example, and therefore a description thereof will be omitted. A description will be given of an example in which a selected reporting setting is notified through feedback, with reference to FIG. 13.

FIG. 13 shows an example in which feedback is performed by using PUSCH (Physical Uplink Shared Channel). Information to be fed back includes channel state information (CSI) and the like on transmission points selected in a reporting set. In the fourth example, the identifier "0" or "1" identifying a reporting setting is inserted in a feedback at every TTI. Here, the identifier "0" identifying the reporting setting 1 is notified at TTI0 and TTI1, while the identifier "1" identifying the reporting setting 2 is notified at TTI2 and TTI3. Note that apart from an identifier identifying a reporting setting being inserted at every TTI, it is also possible to insert an identifier identifying a reporting setting only at TTIs when reporting setting is changed (here, only at TTI0 and TTI2). According to the fourth example, the identifier of one of multiple reporting settings is notified through feedback, bringing about the advantage that the overhead of a feedback at each TTI can be made smaller.

### 2.4) Fifth example

A description will be given of a fifth example in the above-described second exemplary embodiment. In RRC signaling in the above-described fourth example, reporting sets and feedback methods for the reporting sets are notified to the network side. In the fifth example, however, reporting-target transmission points and feedback methods for the transmission points are notified. Moreover, in feedback of the fourth example, notified is a selected one of reporting settings, which include combinations of multiple transmission points. In the fifth example, however, only information about reporting settings to be applied, among respective reporting settings for the individual transmission points notified through RRC signaling, is notified to the network side. Note that RRC signaling used to notify multiple reporting settings is as described in the second example, and therefore a description thereof will be omitted. A description will be given of an example in which the identifiers of selected reporting settings only are notified by using feedback only when reporting setting is changed, with reference to FIG. 14.

Referring to FIG. 14, the identifiers "00" and "01" identifying the reporting settings 1 and 2 are notified through feedback at TTI0, and the identifiers "00" and "10" identifying the reporting settings 1 and 3 are notified through feedback at TTI2 when reporting setting is updated to the reporting setting 2. Note that identifiers identifying reporting settings may be inserted at every TTI as in the above-described fourth example, not that identifiers identifying reporting settings are transmitted only at TTIs when reporting setting is changed (only at TTI0 and TTI2).

In general, as the number of elements in a reporting set increases, the number of combinations for reporting sets to be notified through RRC signaling grows, and so the overhead of RRC signaling becomes larger. However, according to the fifth example, a reporting setting can be configured for each transmission point, bringing about the advantage that an increase in the overhead of RRC signaling can be suppressed.

### 2.5) Sixth example

A description will be given of a sixth example in the above-described second exemplary embodiment. In the sixth example, reporting-target transmission points and feedback methods for the transmission points are notified through RRC signaling as in the fifth example, but the method of feedback is different from that of the fifth example. In the fifth example, only information about reporting settings to be applied, among respective reporting settings for the individual transmission points notified through RRC signaling, is notified. In the sixth example, however, an indicator of whether or not a reporting setting is applied is notified with respect to each of multiple reporting settings. Note that RRC signaling used to notify multiple reporting settings is as described in the third example, and therefore a description thereof will be omitted. A description will be given of an example in which an indicator of whether or not a reporting setting is applied is notified with respect to each of multiple reporting settings through feedback only when reporting setting is changed, with reference to FIG. 15.

Referring to FIG. 15, it is assumed in this example that an indicator "0" indicates that no reporting is performed, while an indicator "1" indicates that reporting is performed, and that notification thereof is made with respect to the reporting settings 1, 2, and 3 in this order. Accordingly, at TTI0, since it is notified that the reporting settings 1 and 2 are applied, the indicators "1," "1," and "0" are transmitted in this order. At TTI2, since reporting setting is updated to the reporting settings 1 and 3, the indicators "1," "0," and "1" are transmitted in this order.

Note that although the indicators indicating reporting setting are transmitted only at TTIs when reporting setting is changed (only at TTI0 and TTI2) in the sixth example, the indicators indicating reporting setting may be inserted at every TTI as in the fourth example.

According to the sixth example, since a reporting setting can be configured for each transmission point, an increase in the overhead of RRC signaling can be suppressed as in the fifth example. Moreover, indicators with respect to all of the multiple reporting settings are notified through feedback, bringing about the advantage that the overhead of RRC signaling can be made even smaller than that of the fifth example. As described above, according to the second exemplary embodiment, the overhead of a feedback can be suppressed by notifying reporting setting candidates through RRC signaling. Moreover, the UE can determine a reporting setting or reporting settings by using information that is already known to the UE side.

### 3. Third exemplary embodiment

In the first exemplary embodiment shown in FIG. 2, a description is given of a case where the CoMP controller 300 and each transmission point TP are independent of each other. However, the present invention is not limited to this. Transmission points TP may be configured such that each of them is provided with functionality equivalent to the CoMP controller 300 and is connected to and communicable with one another. Hereinafter, transmission points TP according to a third exemplary embodiment of the present invention will be described with reference to FIG. 16. However, functional blocks equivalent to those of the first exemplary embodiment will be denoted by the same reference signs as in the first exemplary embodiment and a description thereof will be omitted.

Referring to FIG. 16, a transmission point TP1 includes an RRC signaling generation section 201.1, an L1/L2 signaling generation section 202.1, and a radio section 203.1 as in the first exemplary embodiment shown in FIG. 2, but further includes a CoMP control section 1000 in the present exemplary embodiment. The CoMP control section 1000 includes a reporting setting candidate generation section 1001, a reporting setting section 1002, and an inter-point communication section 1005. The reporting setting section 1002 includes a feedback method determination section 1003 and a reporting set determination section 1004. The reporting setting candidate generation section 1001 and the reporting setting section 1002 have similar functions to those of the reporting setting candidate generation section 301 and the reporting setting section 302 according to the first exemplary embodiment shown in FIG. 2, respectively, and therefore a description thereof will be omitted. Note that other transmission points (TPx) have similar functional configurations, which are therefore not shown in FIG. 16.

Each transmission point TP according to the third exemplary embodiment, provided with the CoMP control section 1000 and the inter-point communication section 1005, can perform coordinated transmission control while exchanging information with other transmission points TP. Methods for notifying reporting settings are similar to those of the first exemplary embodiment, and therefore a description thereof will be omitted.

Moreover, in the second exemplary embodiment shown in FIG. 11, it is also possible to configure the transmission points TP to be connected to and communicable with each other, by similarly providing each transmission point TP with functionality equivalent to the CoMP controller 700.

### 4. Other embodiments

A wireless communications system according to the present invention may be a system in which the above-described first and second exemplary embodiments coexist. For example, the first and second exemplary embodiments may be switched from one to another for each UE within the system. In this case, the network notifies each UE of an identifier identifying the first or second exemplary embodiment by using RRC signaling. The UEs identify whether to operate according to the first exemplary embodiment or to operate according to the second exemplary embodiment, depending on the information in RRC signaling.

### [Industrial Applicability]

The present invention is applicable to mobile wireless systems in general in which multiple transmission points perform transmission in coordination with each other.

### [Reference Signs List]

- 201.1-201.3: RRC signaling generation sections
- 202.1-202.3: L1/L2 signaling generation sections
- 203.1-203.3: Radio sections
- 300: CoMP controller
- 301: Reporting setting candidate generation section
- 302: Reporting setting section
- 303: Feedback method determination section
- 304: Reporting set determination section
- 400: User terminal (UE)
- 401: Radio section
- 402: CSI measurement section
- 403: Feedback generation section
- 601.1-601.3: RRC signaling generation sections
- 602.1-602.3: Radio sections
- 700: CoMP controller
- 701: Reporting setting candidate generation section
- 800: User terminal (UE)
- 801: Radio section
- 802: CSI measurement section
- 803: Reporting setting section
- 804: Feedback method determination section
- 805: Reporting set determination section
- 806: Feedback generation section
- 1000: CoMP controller
- 1001: Reporting setting candidate generation section
- 1002: Reporting setting section
- 1003: Feedback method determination section
- 1004: Reporting set determination section
- 1005: Inter-point communication section

## Claims

1. A mobile station **characterized by** comprising:
a reception means for receiving a first signal of Radio Resource Control (RRC), the first signal including a first identifier associated with a first Channel State Information (CSI)-Reference Signal (RS) resource and a second identifier associated with a second CSI-RS resource;
wherein the reception means for receiving a second signal in a Physical Downlink Control Channel (PDCCH), the second signal including at least one of a first value corresponding to the first identifier and a second value corresponding to the second identifier;
a measurement means for determining a first channel measurement for a first Channel Quality Indicator (CQI) value based on a first CSI-RS within the first CSI-RS resource in a case where the second signal includes the first value,
wherein the measurement means for determining the first channel measurement for the first CQI value based on a second CSI-RS within the second CSI-RS resource in a case where the second signal includes the second value; and
a transmission means for reporting CSI comprising the first CQI value.

2. The mobile station according to claim 1, **characterized in that** the first identifier is associated with the first CSI-RS resource and a third CSI-RS resource,
the second identifier is associated with the second CSI-RS resource and a fourth CSI-RS resource,
the measurement means is configured to determine a second channel measurement for a second CQI value based on a third CSI-RS within the third CSI-RS resource in a case where the second signal includes the first value,
the measurement means is configured to determine the second channel measurement for the second CQI value based on a fourth CSI-RS within the fourth CSI-RS resource in a case where the second signal includes the second value, and
the transmission means for reporting the CSI including the second CQI value.

3. The mobile station according to claim 1 or 2, **characterized in that** the first CSI-RS corresponds to a first way to determine the first CQI value.

4. The mobile station according to any one of claims 1 to 3, **characterized in that** the second CSI-RS corresponds to a second way to determine the first CQI value.

5. The mobile station according to any one of claims 1 to 4, **characterized in that** a minimum notification interval of the first signal is larger than a minimum notification interval of the second signal.

6. The mobile station according to any one of claims 1 to 5, **characterized in that** the first signal corresponds to CQI-ReportConfig and the second signal corresponds to Downlink Link Control Information (DCI).

7. A method of a mobile station **characterized by** comprising:
receiving, by a reception means, a first signal of Radio Resource Control (RRC), the first signal including a first identifier associated with a first Channel State Information (CSI)-Reference Signal (RS) resource and a second identifier associated with a second CSI-RS resource;
receiving, by a reception means, a second signal in a Physical Downlink Control Channel (PDCCH), the second signal including at least one of a first value corresponding to the first identifier and a second value corresponding to the second identifier;
determining, by a measurement means, a first channel measurement for a first Channel Quality Indicator (CQI) value based on a first CSI-RS within the first CSI-RS resource in a case where the second signal includes the first value;
determining, by a measurement means, the first channel measurement for the first CQI value based on a second CSI-RS within the second CSI-RS resource in a case where the second signal includes the second value; and
reporting, by a transmission means, CSI comprising the first CQI value.

8. The method according to claim 7, **characterized in that** the first identifier is associated with the first CSI-RS resource and a third CSI-RS resource,
the second identifier is associated with the second CSI-RS resource and a fourth CSI-RS resource,
determining, by a measurement means, a second channel measurement for a second CQI value based on a third CSI-RS within the third CSI-RS resource in a case where the second signal includes the first value,
determining, by a measurement means, the second channel measurement for the second CQI value based on a fourth CSI-RS within the fourth CSI-RS resource in a case where the second signal includes the second value, and
reporting, by a transmission means, the CSI including the second CQI value.

9. The method according to claim 7 or 8, **characterized in that** the first CSI-RS corresponds to a first way to determine the first CQI value.

10. The method according to any one of claims 7 to 9, **characterized in that** the second CSI-RS corresponds to a second way to determine the first CQI value.

11. The method according to any one of claims 7 to 10, **characterized in that** a minimum notification interval of the first signal is larger than a minimum notification interval of the second signal.

12. The method according to any one of claims 7 to 11, **characterized in that** the first signal corresponds to CQI-ReportConfig and the second signal corresponds to Downlink Link Control Information (DCI).

13. A base station **characterized by** comprising:
a transmission means for transmitting a first signal of Radio Resource Control (RRC), the first signal including a first identifier associated with a first Channel State Information (CSI)-Reference Signal (RS) resource and a second identifier associated with a second CSI-RS resource;
wherein the transmission means for transmitting a second signal in a Physical Downlink Control Channel (PDCCH), the second signal including at least one of a first value corresponding to the first identifier and a second value corresponding to the second identifier; and
a reception means for receiving CSI comprising a first Channel Quality Indicator (CQI) value,
wherein a first channel measurement for the first CQI value is determined based on a first CSI-RS within the first CSI-RS resource in a case where the second signal includes the first value
wherein the first channel measurement for the first CQI value is determined based on a second CSI-RS within the second CSI-RS resource in a case where the second signal includes the second value.

14. The base station according to claim 13, **characterized in that** the first identifier is associated with the first CSI-RS resource and a third CSI-RS resource,
the second identifier is associated with the second CSI-RS resource and a fourth CSI-RS resource,
the reception means for receiving the CSI including a second CQI value,
wherein a second channel measurement for the second CQI value is determined based on a third CSI-RS within the third CSI-RS resource in a case where the second signal includes the first value,
wherein the second channel measurement for the second CQI value is determined based on a fourth CSI-RS within the fourth CSI-RS resource in a case where the second signal includes the second value.

15. The base station according to claim 13 or 14, **characterized in that** the first CSI-RS corresponds to a first way to determine the first CQI value.

16. The base station according to any one of claims 13 to 15, **characterized in that** the second CSI-RS corresponds to a second way to determine the first CQI value.

17. The base station according to any one of claims 13 to 16, **characterized in that** a minimum notification interval of the first signal is larger than a minimum notification interval of the second signal.

18. The base station according to any one of claims 13 to 17, **characterized in that** the first signal corresponds to CQI-ReportConfig and the second signal corresponds to Downlink Link Control Information (DCI).

19. A method of a base station **characterized by** comprising:
transmitting, by a transmission means, a first signal of Radio Resource Control (RRC), the first signal including a first identifier associated with a first Channel State Information (CSI)-Reference Signal (RS) resource and a second identifier associated with a second CSI-RS resource;
transmitting, by the transmission means, a second signal in a Physical Downlink Control Channel (PDCCH), the second signal including at least one of a first value corresponding to the first identifier and a second value corresponding to the second identifier; and
receiving, by a reception means, CSI comprising a first Channel Quality Indicator (CQI) value,
wherein a first channel measurement for the first CQI value is determined based on a first CSI-RS within the first CSI-RS resource in a case where the second signal includes the first value
wherein the first channel measurement for the first CQI value is determined based on a second CSI-RS within the second CSI-RS resource in a case where the second signal includes the second value.

20. The method according to claim 19, **characterized in that** the first identifier is associated with the first CSI-RS resource and a third CSI-RS resource,
the second identifier is associated with the second CSI-RS resource and a fourth CSI-RS resource,
receiving, by the reception means, the CSI including a second CQI value,
wherein a second channel measurement for the second CQI value is determined based on a third CSI-RS within the third CSI-RS resource in a case where the second signal includes the first value,
wherein the second channel measurement for the second CQI value is determined based on a fourth CSI-RS within the fourth CSI-RS resource in a case where the second signal includes the second value.

21. The method according to claim 19 or 20, **characterized in that** the first CSI-RS corresponds to a first way to determine the first CQI value.

22. The method according to any one of claims 19 to 21, **characterized in that** the second CSI-RS corresponds to a second way to determine the first CQI value.

23. The method according to any one of claims 19 to 22, **characterized in that** a minimum notification interval of the first signal is larger than a minimum notification interval of the second signal.

24. The method according to any one of claims 19 to 23, **characterized in that** the first signal corresponds to CQI-ReportConfig and the second signal corresponds to Downlink Link Control Information (DCI).

## Patentansprüche

1. Mobilstation, **dadurch gekennzeichnet, dass** sie aufweist:
eine Empfangseinrichtung zum Empfangen eines ersten Signals der Funkressourcensteuerung (RRC, Radio Resource Control), wobei das erste Signal einen ersten Kennzeichner enthält, der einer ersten Kanalzustandsinformations-(CSI, Channel State Information-)Referenzsignal-(RS-)Ressource zugeordnet ist, und einen zweiten Kennzeichner, der einer zweiten CSI-RS-Ressource zugeordnet ist;
wobei die Empfangseinrichtung zum Empfangen eines zweiten Signals in einem physikalischen Abwärtsstrecken-Steuerkanal (PDCCH, Physical Downlink Control Channel), das zweite Signal wenigstens einen von einem ersten Wert, der dem ersten Kennzeichner entspricht, und von einem zweiten Wert, der dem zweiten Kennzeichner entspricht, enthält;
eine Messeinrichtung zum Bestimmen einer ersten Kanalmessung für einen ersten Kanalqualitätskennzeichnungs-(CQI, Channel Quality Indicator-)Wert basierend auf einem ersten CSI-RS in der ersten CSI-RS-Ressource in einem Fall, in dem das zweite Signal den ersten Wert enthält,
wobei die Messeinrichtung die erste Kanalmessung für den ersten CQI-Wert basierend auf einem zweiten CSI-RS in der zweiten CSI-RS-Ressource in einem Fall bestimmt wird, in dem das zweite Signal den zweiten Wert enthält; und
eine Übertragungseinrichtung zum Melden der CSI, die den ersten CQI-Wert aufweist.

2. Mobilstation nach Anspruch 1, **dadurch gekennzeichnet, dass** der erste Kennzeichner der ersten CSI-RS-Ressource und einer dritten CSI-RS-Ressource zugeordnet ist,
der zweite Kennzeichner der zweiten CSI-RS-Ressource und einer vierten CSI-RS-Ressource zugeordnet ist,
die Messeinrichtung dazu ausgestaltet ist, eine zweite Kanalmessung für den zweiten CQI-Wert basierend auf einem dritten CSI-RS in der dritten CSI-RS-Ressource in einem Fall zu bestimmen, in dem das zweite Signal den ersten Wert enthält,
die Messeinrichtung dazu ausgestaltet ist, die zweite Kanalmessung für den zweiten CQI-Wert basierend auf einem vierten CSI-RS in der vierten CSI-RS-Ressource in einem Fall zu bestimmen, in dem das zweite Signal den zweiten Wert enthält, und die Übertragungseinrichtung zum Melden der CSI, die den zweiten CQI-Wert enthält.

3. Mobilstation nach Anspruch 1 oder 2, **dadurch gekennzeichnet, dass** der erste CSI-RS einer ersten Weise zum Bestimmen des ersten CQI-Werts entspricht.

4. Mobilstation nach einem der Ansprüche 1 bis 3, **dadurch gekennzeichnet, dass** der zweite CSI-RS einer zweiten Weise zum Bestimmen des ersten CQI-Werts entspricht.

5. Mobilstation nach einem der Ansprüche 1 bis 4, **dadurch gekennzeichnet, dass** ein kleinstes Benachrichtigungsintervall des ersten Signals größer ist als ein kleinstes Benachrichtigungsintervall des zweiten Signals.

6. Mobilstation nach einem der Ansprüche 1 bis 5, **dadurch gekennzeichnet, dass** das erste Signal CQI-ReportConfig entspricht und das zweite Signal der Abwärtsstrecken-Steuerinformation (DCI, Downlink Control Information) entspricht.

7. Verfahren einer Mobilstation, **dadurch gekennzeichnet, dass** es aufweist:
Empfangen durch eine Empfangseinrichtung eines ersten Signals der Funkressourcensteuerung (RRC), wobei das erste Signal einen ersten Kennzeichner enthält, der einer ersten Kanalzustandsinformations-(CSI-)Referenzsignal-(RS-)Ressource zugeordnet ist, und einen zweiten Kennzeichner, der einer zweiten CSI-RS-Ressource zugeordnet ist;
Empfangen durch eine Empfangseinrichtung eines zweiten Signals in einem Abwärtsstrecken-Steuerkanal (PDCCH), wobei das zweite Signal wenigstens einen von einem ersten Wert, der dem ersten Kennzeichner spricht, und von einem zweiten Wert, der dem zweiten Kennzeichner entspricht, enthält;
Bestimmen durch eine Messeinrichtung einer ersten Kanalmessung für einen ersten Kanalqualitätskennzeichnungs-(CQI-)Wert basierend auf einem ersten CSI-RS in der ersten CSI-RS-Ressource in einem Fall, in dem das zweite Signal den ersten Wert enthält;
Bestimmen durch eine Messeinrichtung der ersten Kanalmessung für einen ersten CQI-Wert basierend auf einem zweiten CSI-RS in der zweiten CSI-RS-Ressource in einem Fall, in dem das zweite Signal den zweiten Wert enthält; und
Melden durch eine Übertragungseinrichtung der CSI, die den ersten CQI-Wert aufweist.

8. Verfahren nach Anspruch 7, **dadurch gekennzeichnet, dass** der erste Kennzeichner der ersten CSI-RS-Ressource und einer dritten CSI-RS-Ressource zugeordnet ist, der zweite Kennzeichner der zweiten CSI-RS-Ressource und einer vierten CSI-RS-Ressource zugeordnet ist,
Bestimmen durch eine Messeinrichtung einer zweiten Kanalmessung für einen zweiten CQI-Wert basierend auf einem dritten CSI-RS in der dritten CSI-RS-Ressource in einem Fall, in dem das zweite Signal den ersten Wert enthält, Bestimmen durch eine Messeinrichtung der zweiten Kanalmessung für den zweiten CQI-Wert basierend auf einem vierten CSI-RS in der vierten CSI-RS-Ressource in einem Fall, in dem das zweite Signal den zweiten Wert enthält, und
Melden durch eine Übertragungseinrichtung der CSI, die den zweiten CQI-Wert enthält.

9. Verfahren nach Anspruch 7 oder 8, **dadurch gekennzeichnet, dass** das erste CSI-RS einer ersten Weise zum Bestimmen des ersten CQI-Werts entspricht.

10. Verfahren nach einem der Ansprüche 7 bis 9, **dadurch gekennzeichnet, dass** das zweite CSI-RS einer zweiten Weise zum Bestimmen des ersten CQI-Werts entspricht.

11. Verfahren nach einem der Ansprüche 7 bis 10, **dadurch gekennzeichnet, dass** ein kleinstes Benachrichtigungsintervall des ersten Signals größer ist als ein kleinstes Benachrichtigungsintervall des zweiten Signals.

12. Verfahren nach einem der Ansprüche 7 bis 11, **dadurch gekennzeichnet, dass** das erste Signal CQI-ReportConfig entspricht und das zweite Signal der Abwärtsstrecken-Steuerinformation (DCI) entspricht.

13. Basisstation, **dadurch gekennzeichnet, dass** sie aufweist:
eine Übertragungseinrichtung zum Übertragen eines ersten Signals der Funkressourcensteuerung (RRC), wobei das erste Signal einen ersten Kennzeichner enthält, der einer ersten Kanalzustandsinformations-(CSI-)Referenzsignal-(RS-)Ressource zugeordnet ist, und einen zweiten Kennzeichner, der einer zweiten CSI-RS-Ressource zugeordnet ist;
wobei bei der Übertragungseinrichtung zum Übertragen eines zweiten Signals in einem physikalischen Abwärtsstrecken-Steuerkanal (PDCCH) das zweite Signal wenigstens einen von einem ersten Wert, der dem ersten Kennzeichner entspricht, und von einem zweiten Wert, der dem zweiten Kennzeichner entspricht, enthält; und
eine Empfangseinrichtung zum Empfangen der CSI, die einen ersten Kanalqualitätskennzeichnungs-(CQI-)Wert aufweist,
wobei eine erste Kanalmessung für den ersten CQI-Wert basierend auf einem ersten CSI-RS in der ersten CSI-RS-Ressource in einem Fall bestimmt wird, in dem das zweite Signal den ersten Wert enthält
wobei die erste Kanalmessung für den ersten CQI-Wert basierend auf einem zweiten CSI-RS in der zweiten CSI-RS-Ressource in einem Fall bestimmt wird, in dem das zweite Signal den zweiten Wert enthält.

14. Basisstation nach Anspruch 13, **dadurch gekennzeichnet, dass** der erste Kennzeichner der ersten CSI-RS-Ressource und einer dritten CSI-RS-Ressource zugeordnet ist,
der zweite Kennzeichner der zweiten CSI-RS-Ressource und einer vierten CSI-RS-Ressource zugeordnet ist,
die Empfangseinrichtung zum Empfangen des CSI einen zweiten CQI-Wert enthält,
wobei eine zweite Kanalmessung für den zweiten CQI-Wert basierend auf einem dritten CSI-RS in der dritten CSI-RS-Ressource in einem Fall bestimmt wird, in dem das zweite Signal den ersten Wert enthält,
wobei die zweite Kanalmessung für den zweiten CQI-Wert basierend auf einem vierten CSI-RS in der vierten CSI-RS-Ressource in einem Fall bestimmt wird, in dem das zweite Signal den zweiten Wert enthält.

15. Basisstation nach Anspruch 13 oder 14, **dadurch gekennzeichnet, dass** der erste CSI-RS einer ersten Weise zum Bestimmen des ersten CQI-Werts entspricht.

16. Basistation nach einem der Ansprüche 13 bis 15, **dadurch gekennzeichnet, dass** der zweite CSI-RS einer zweiten Weise zum Bestimmen des ersten CQI-Werts entspricht.

17. Basisstation nach einem der Ansprüche 13 bis 16, **dadurch gekennzeichnet, dass** ein kleinstes Benachrichtigungsintervall des ersten Signals größer ist als ein kleinstes Benachrichtigungsintervall des zweiten Signals.

18. Bassstation nach einem der Ansprüche 13 bis 17, **dadurch gekennzeichnet, dass** das erste Signal CQI-ReportConfig entspricht und das zweite Signal der Abwärtsstrecken-Steuerinformation (DCI) entspricht.

19. Verfahren einer Basisstation, **dadurch gekennzeichnet, dass** es aufweist:
Übertragen durch eine Übertragungseinrichtung eines ersten Signals der Funkressourcensteuerung (RRC), wobei das erste Signal einen ersten Kennzeichner enthält, der einer ersten Kanalzustandsinformations-(CSI-)Referenzsignal-(RS-)Ressource zugeordnet ist, und einen zweiten Kennzeichner, der einer zweiten CSI-RS-Ressource zugeordnet ist;
Übertragen durch die Übertragungseinrichtung eines zweiten Signals in einem physikalischen Abwärtsstrecken-Steuerkanal (PDCCH), wobei das zweite Signal wenigstens einen von einem ersten Wert, der dem ersten Kennzeichner entspricht, und von einem zweiten Wert, der dem zweiten Kennzeichner entspricht, enthält; und
Empfangen durch eine Empfangseinrichtung der CSI, die einen ersten Kanalqualitätskennzeichnungs-(CQI-)Wert aufweist,
wobei eine erste Kanalmessung für den ersten CQI-Wert basierend auf einem ersten CSI-RS in der ersten CSI-RS-Ressource in einem Fall bestimmt wird, in dem das zweite Signal den ersten Wert enthält
wobei die erste Kanalmessung für den ersten CQI-Wert basierend auf einem zweiten CSI-RS in der zweiten CSI-RS-Ressource in einem Fall bestimmt wird, in dem das zweite Signal den zweiten Wert enthält.

20. Verfahren nach Anspruch 19, **dadurch gekennzeichnet, dass** der erste Kennzeichner der ersten CSI-RS-Ressource und einer dritten CSI-RS-Ressource zugeordnet ist, der zweite Kennzeichner der zweiten CSI-RS-Ressource und einer vierten CSI-RS-Ressource zugeordnet ist,
Empfangen durch die Empfangseinrichtung der CSI, die einen zweiten CQI-Wert aufweist,
wobei eine zweite Kanalmessung für den zweiten CQI-Wert basierend auf einem dritten CSI-RS in der dritten CSI-RS-Ressource in einem Fall bestimmt wird, in dem das zweite Signal den ersten Wert enthält
wobei die zweite Kanalmessung für den zweiten CQI-Wert basierend auf einem vierten CSI-RS in der vierten CSI-RS-Ressource in einem Fall bestimmt wird, in dem das zweite Signal den zweiten Wert enthält.

21. Verfahren nach Anspruch 19 oder 20, **dadurch gekennzeichnet, dass** das erste CSI-RS einer ersten Weise zum Bestimmen des ersten CQI-Werts entspricht.

22. Verfahren nach einem der Ansprüche 19 bis 21, **dadurch gekennzeichnet, dass** das zweite CSI-RS einer zweiten Weise zum Bestimmen des ersten CQI-Werts entspricht.

23. Verfahren nach einem der Ansprüche 19 bis 22, **dadurch gekennzeichnet, dass** ein kleinstes Benachrichtigungsintervall des ersten Signals größer ist als ein kleinstes Benachrichtigungsintervall des zweiten Signals.

24. Verfahren nach einem der Ansprüche 19 bis 23, **dadurch gekennzeichnet, dass** das erste Signal CQI-ReportConfig entspricht und das zweite Signal der Abwärtsstrecken-Steuerinformation (DCI) entspricht.

## Revendications

1. Station mobile **caractérisée en ce qu'**elle comprend :
un moyen de réception pour recevoir un premier signal de commande de ressource radio (RRC), le premier signal incluant un premier identifiant associé à une première ressource de signal de référence (RS) d'informations d'état de canal (CSI) et un second identifiant associé à une seconde ressource de CSI-RS ;
dans laquelle le moyen de réception pour recevoir un second signal dans un canal physique de commande de liaison descendante (PDCCH), le second signal incluant au moins une parmi une première valeur correspondant au premier identifiant et une seconde valeur correspondant au second identifiant ;
un moyen de mesure pour déterminer une première mesure de canal pour une première valeur d'indicateur de qualité de canal (CQI) sur la base d'un premier CSI-RS à l'intérieur de la première ressource de CSI-RS dans un cas où le second signal inclut la première valeur,
dans laquelle le moyen de mesure pour déterminer la première mesure de canal pour la première valeur de CQI sur la base d'un second CSI-RS à l'intérieur de la deuxième ressource de CSI-RS dans un cas où le second signal inclut la seconde valeur ; et
un moyen de transmission pour rapporter des CSI comprenant la première valeur de CQI.

2. Station mobile selon la revendication 1, **caractérisée en ce que** le premier identifiant est associé à la première ressource de CSI-RS et à une troisième ressource de CSI-RS,
le second identifiant est associé à la deuxième ressource de CSI-RS et à une quatrième ressource de CSI-RS,
le moyen de mesure est configuré pour déterminer une seconde mesure de canal pour une seconde valeur de CQI sur la base d'un troisième CSI-RS à l'intérieur de la troisième ressource de CSI-RS dans un cas où le second signal inclut la première valeur,
le moyen de mesure est configuré pour déterminer la seconde mesure de canal pour la seconde valeur de CQI sur la base d'un quatrième CSI-RS à l'intérieur de la quatrième ressource de CSI-RS dans un cas où le second signal inclut la seconde valeur, et
le moyen de transmission pour rapporter les CSI incluant la seconde valeur de CQI.

3. Station mobile selon la revendication 1 ou 2, **caractérisée en ce que** le premier CSI-RS correspond à une première façon de déterminer la première valeur de CQI.

4. Station mobile selon l'une quelconque des revendications 1 à 3, **caractérisée en ce que** le second CSI-RS correspond à une seconde façon de déterminer la première valeur de CQI.

5. Station mobile selon l'une quelconque des revendications 1 à 4, **caractérisée en ce qu'**un intervalle de notification minimal du premier signal est plus grand qu'un intervalle de notification minimal du second signal.

6. Station mobile selon l'une quelconque des revendications 1 à 5, **caractérisée en ce que** le premier signal correspond à CQI-ReportConfig et le second signal correspond à des informations de commande de liaison descendante (DCI).

7. Procédé d'une station mobile **caractérisé en ce qu'**il comprend :
la réception, par un moyen de réception, d'un premier signal de commande de ressource radio (RRC), le premier signal incluant un premier identifiant associé à une première ressource de signal de référence (RS) d'informations d'état de canal (CSI) et un second identifiant associé à une deuxième ressource de CSI-RS ;
la réception, par un moyen de réception, d'un second signal dans un canal physique de commande de liaison descendante (PDCCH), le second signal incluant au moins une parmi une première valeur correspondant au premier identifiant et une seconde valeur correspondant au second identifiant ;
la détermination, par un moyen de mesure, d'une première mesure de canal pour une première valeur d'indicateur de qualité de canal (CQI) sur la base d'un premier CSI-RS à l'intérieur de la première ressource de CSI-RS dans un cas où le second signal inclut la première valeur ;
la détermination, par un moyen de mesure, de la première mesure de canal pour la première valeur de CQI sur la base d'un second CSI-RS à l'intérieur de la deuxième ressource de CSI-RS dans un cas où le second signal inclut la seconde valeur ; et
le rapport, par un moyen de transmission, de CSI comprenant la première valeur de CQI.

8. Procédé selon la revendication 7, **caractérisé en ce que** le premier identifiant est associé à la première ressource de CSI-RS et à une troisième ressource de CSI-RS,
le second identifiant est associé à la deuxième ressource de CSI-RS et à une quatrième ressource de CSI-RS,
la détermination, par un moyen de mesure, d'une seconde mesure de canal pour une seconde valeur de CQI sur la base d'un troisième CSI-RS à l'intérieur de la troisième ressource de CSI-RS dans un cas où le second signal inclut la première valeur,
la détermination, par un moyen de mesure, de la seconde mesure de canal pour la seconde valeur de CQI sur la base d'un quatrième CSI-RS à l'intérieur de la quatrième ressource de CSI-RS dans un cas où le second signal inclut la seconde valeur, et
le rapport, par un moyen de transmission, des CSI incluant la seconde valeur de CQI.

9. Procédé selon la revendication 7 ou 8, **caractérisé en ce que** le premier CSI-RS correspond à une première façon de déterminer la première valeur de CQI.

10. Procédé selon l'une quelconque des revendications 7 à 9, **caractérisé en ce que** le second CSI-RS correspond à une seconde façon de déterminer la première valeur de CQI.

11. Procédé selon l'une quelconque des revendications 7 à 10, **caractérisé en ce qu'**un intervalle de notification minimal du premier signal est plus grand qu'un intervalle de notification minimal du second signal.

12. Procédé selon l'une quelconque des revendications 7 à 11, **caractérisé en ce que** le premier signal correspond à CQI-ReportConfig et le second signal correspond à des informations de commande de liaison descendante (DCI).

13. Station de base **caractérisée en ce qu'**elle comprend :
un moyen de transmission pour transmettre un premier signal de commande de ressource radio (RRC), le premier signal incluant un premier identifiant associé à une première ressource de signal de référence (RS) d'informations d'état de canal (CSI) et un second identifiant associé à une deuxième ressource de CSI-RS ;
dans laquelle le moyen de transmission pour transmettre un second signal dans un canal physique de commande de liaison descendante (PDCCH), le second signal incluant au moins une parmi une première valeur correspondant au premier identifiant et une seconde valeur correspondant au second identifiant ; et
un moyen de réception pour recevoir des CSI comprenant une première valeur d'indicateur de qualité de canal (CQI),
dans laquelle une première mesure de canal pour la première valeur de CQI est déterminée sur la base d'un premier CSI-RS à l'intérieur de la première ressource de CSI-RS dans un cas où le second signal inclut la première valeur,
dans laquelle la première mesure de canal pour la première valeur de CQI est déterminée sur la base d'un second CSI-RS à l'intérieur de la deuxième ressource de CSI-RS dans un cas où le second signal inclut la seconde valeur.

14. Station de base selon la revendication 13, **caractérisée en ce que** le premier identifiant est associé à la première ressource de CSI-RS et à une troisième ressource de CSI-RS,
le second identifiant est associé à la deuxième ressource de CSI-RS et à une quatrième ressource de CSI-RS,
le moyen de réception pour recevoir les CSI incluant une seconde valeur de CQI,
dans laquelle une seconde mesure de canal pour la seconde valeur de CQI est déterminée sur la base d'un troisième CSI-RS à l'intérieur de la troisième ressource de CSI-RS dans un cas où le second signal inclut la première valeur,
dans laquelle la seconde mesure de canal pour la seconde valeur de CQI est déterminée sur la base d'un quatrième CSI-RS à l'intérieur de la quatrième ressource de CSI-RS dans un cas où le second signal inclut la seconde valeur.

15. Station de base selon la revendication 13 ou 14, **caractérisée en ce que** le premier CSI-RS correspond à une première façon de déterminer la première valeur de CQI.

16. Station de base selon l'une quelconque des revendications 13 à 15, **caractérisée en ce que** le second CSI-RS correspond à une seconde façon de déterminer la première valeur de CQI.

17. Station de base selon l'une quelconque des revendications 13 à 16, **caractérisée en ce qu'**un intervalle de notification minimal du premier signal est plus grand qu'un intervalle de notification minimal du second signal.

18. Station de base selon l'une quelconque des revendications 13 à 17, **caractérisée en ce que** le premier signal correspond à CQI-ReportConfig et le second signal correspond à des informations de commande de liaison descendante (DCI).

19. Procédé d'une station de base, **caractérisé en ce qu'**il comprend :
la transmission, par un moyen de transmission, d'un premier signal de commande de ressource radio (RRC), le premier signal incluant un premier identifiant associé à une première ressource de signal de référence (RS) d'informations d'état de canal (CSI) et un second identifiant associé à une deuxième ressource de CSI-RS ;
la transmission, par le moyen de transmission, d'un second signal dans un canal physique de commande de liaison descendante (PDCCH), le second signal incluant au moins une parmi une première valeur correspondant au premier identifiant et une seconde valeur correspondant au second identifiant ; et
la réception, par un moyen de réception, de CSI comprenant une première valeur d'indicateur de qualité de canal (CQI),
dans lequel une première mesure de canal pour la première valeur de CQI est déterminée sur la base d'un premier CSI-RS à l'intérieur de la première ressource de CSI-RS dans un cas où le second signal inclut la première valeur,
dans lequel la première mesure de canal pour la première valeur de CQI est déterminée sur la base d'un second CSI-RS à l'intérieur de la deuxième ressource de CSI-RS dans un cas où le second signal inclut la seconde valeur.

20. Procédé selon la revendication 19, **caractérisé en ce que** le premier identifiant est associé à la première ressource de CSI-RS et à une troisième ressource de CSI-RS,
le second identifiant est associé à la deuxième ressource de CSI-RS et à une quatrième ressource de CSI-RS,
la réception, par le moyen de réception, des CSI incluant une seconde valeur de CQI,
dans lequel une seconde mesure de canal pour la seconde valeur de CQI est déterminée sur la base d'un troisième CSI-RS à l'intérieur de la troisième ressource de CSI-RS dans un cas où le second signal inclut la première valeur,
dans lequel la seconde mesure de canal pour la seconde valeur de CQI est déterminée sur la base d'un quatrième CSI-RS à l'intérieur de la quatrième ressource de CSI-RS dans un cas où le second signal inclut la seconde valeur.

21. Procédé selon la revendication 19 ou 20, **caractérisé en ce que** le premier CSI-RS correspond à une première façon de déterminer la première valeur de CQI.

22. Procédé selon l'une quelconque des revendications 19 à 21, **caractérisé en ce que** le second CSI-RS correspond à une seconde façon de déterminer la première valeur de CQI.

23. Procédé selon l'une quelconque des revendications 19 à 22, **caractérisé en ce qu'**un intervalle de notification minimal du premier signal est plus grand qu'un intervalle de notification minimal du second signal.

24. Procédé selon l'une quelconque des revendications 19 à 23, **caractérisé en ce que** le premier signal correspond à CQI-ReportConfig et le second signal correspond à des informations de commande de liaison descendante (DCI).
